(19) Europäisches Patentamt
European Patent Office
Office européen des brevets

(11) Publication number : **0 523 111 B1**

(12) # EUROPEAN PATENT SPECIFICATION

(45) Date of publication of patent specification : **22.06.94 Bulletin 94/25**

(51) Int. Cl.[5] : **B01F 17/00**, E21B 43/22, // C07C309/10

(21) Application number : **91906964.1**

(22) Date of filing : **02.04.91**

(86) International application number : **PCT/EP91/00616**

(87) International publication number : **WO 91/15290 17.10.91 Gazette 91/24**

(54) **BRANCHED ETHER SURFACTANTS AND THEIR USE IN AN ENHANCED OIL RECOVERY PROCESS.**

(30) Priority : **02.04.90 NO 901490**

(43) Date of publication of application : **20.01.93 Bulletin 93/03**

(45) Publication of the grant of the patent : **22.06.94 Bulletin 94/25**

(84) Designated Contracting States : **DE DK FR GB IT NL**

(56) References cited :
**EP-A- 0 088 206**
**US-A- 4 446 079**
**US-A- 4 468 335**

(73) Proprietor : **BEROL NOBEL AB**
**S-444 85 Stenungsund (SE)**
Proprietor : **DEN NORSKE STATS OLJESELSKAP A.S.**
**Postboks 300 Forus**
**N-4001 Stavanger (NO)**

(72) Inventor : **GILJE, Eimund**
**N-4333 Oltedal (NO)**
Inventor : **SONESSON, Clas**
**Sveagatan 16**
**S-413 14 Göteborg (SE)**
Inventor : **HELLBERG, Per-Erik**
**Uppegardsvägen 64**
**S-444 43 Stenungsund (SE)**
Inventor : **HOLMBERG, Krister**
**Dalgangsgatan 17**
**S-431 39 Mölndal (SE)**
Inventor : **SVENNBERG, Stig**
**Vallmovägen 3**
**S-444 45 Stenungsund (SE)**

(74) Representative : **Barz, Peter, Dr.**
**Schmied-Kowarzik & Partner**
**Siegfriedstrasse 8**
**D-80803 München (DE)**

EP 0 523 111 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a surfactant which forms microemulsions with a very high solubilizing capacity without the use of a cosurfactant. The surfactant and the microemulsion containing said surfactant are suitable for use in enhanced oil recovery.

Microemulsions are made from water, an oil component and a surfactant system. The surfactant system traditionally consists of a true surfactant (hereinafter referred to as "surfactant") and a cosurfactant. The surfactant may be anionic, cationic or amphoteric. The cosurfactant, which is sometimes referred to as a cosolvent or a solubilizing agent, is normally an alkanol having from 3 to 6 carbon atoms, but other types of compounds, such as glycol ethers and amines, may also be used. The cosurfactant is usually a considerably smaller molecule than the surfactant and one of its roles is to affect the molecular packing at the droplet interface in such a way that formation of microemulsion is energetically favoured.

One of the most interesting application areas for microemulsions is surfactant flooding for enhanced oil recovery. Surfactant flooding means injection of a surfactant solution or a microemulsion into a reservoir with a view to decreasing the oil-water interfacial tension and, as a consequence, increasing the amount of oil recovered by flooding.

In high surfactant concentration systems a middle phase microemulsion in equilibrium with excess oil and brine is formed if the surfactant system is well balanced. The existence of the middle phase microemulsion is considered a necessary condition to obtain a satisfactory oil recovery. The microemulsion phase gives an extremely low interfacial tension against brine as well as oil. It has the ability to mobilize oil blocked in narrow pores, it causes coalescence of oil droplets and it ultimately brings about formation of a continuous oil bank which is pushed forward towards the production hole by a water slug.

The formation and preservation of a microemulsion is, consequently, of utmost importance for a successful result in chemical flooding. However, microemulsions are known to be sensitive to changes in composition. They normally only exist within fairly narrow intervals with regard to the surfactant to cosurfactant ratio. During the flooding process a certain degree of separation between the surfactant and the cosurfactant is likely to occur. This separation may be caused either by one of the components adsorbing more strongly to the surface of the formation than the other, or by unequivalent distribution of the two components between the oil and brine phases. A change in composition due to selective precipitation or degradation of one of the components is also conceivable. Consequently, even with well balanced svstems showing only minor differences between the components with regard to adsorption and distribution, a gradual change of system composition will take place in chemical flooding and the microemulsion will normally break. Since a microemulsion in chemical flooding is often transported very long distances, the long-term preservation of the optimum system is regarded a major issue.

The problem of component separation can be avoided or reduced by using certain branched surfactants which easily form microemulsions with or without the addition of a cosurfactant. For example, US-A-4 468 335, US-A-4 468 342, and US-A-4 545 912 disclose surfactants with a branched hydrophobic tail and a polar group consisting of a polyethylene glycol chain with a terminal sulfonate group. These surfactants have been shown to form microemulsions also without a cosurfactant and they have a high capacity to solubilize oil and have been suggested for use in enhanced oil recovery.

US-A-4 446 079 discloses a sulfate and sulfonate surfactant of the general formula

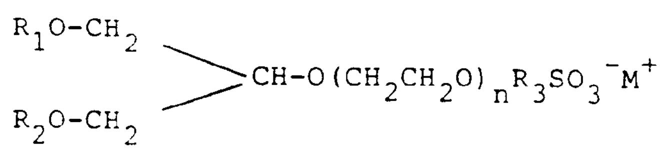

where $R_1$ and $R_2$ are the same or different and are $C_1$-$C_{15}$ hydrocarbyl, $R_3$ is $C_{0-5}$ alkyl, M is a cation and n is a rational number from 2 to 6.

Normally the polyethylene glycol chain consists of 3-5 ethyleneoxy groups to exhibit optimum performance.

Insertion of a polyethylene glycol chain between the sulfate or the sulfonate end group and the 1.3-dialkoxypropyl hydrophobic tail gives a surfactant which has an excellent ability to solubilize oil in the middle phase of a microemulsion and also a good tolerance to high concentrations of divalent cations, such as in seawater. The soluhilizing effect is generally considered an essential property of the microemulsion to obtain a high oil recovery.

We have now surprisingly found that when performing surfactant flooding of an oil well with sea-water, it is possible to further increase the amount of oil recovered by using a novel surfactant, although the solubilizing effect of the novel surfactant is lower than the solubilizing effect of the closest prior art. The novel surfactant of the present invention has the general formula

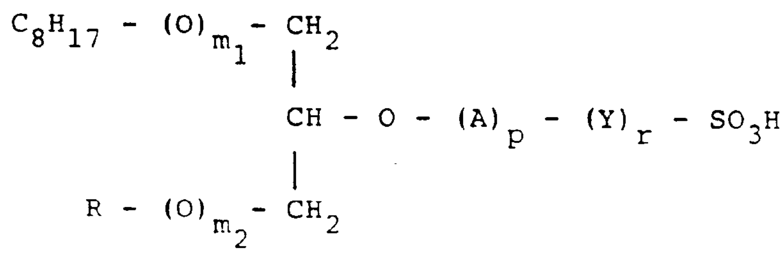

where R is a hydrocarbon containing 4-6 carbon atoms; r is 0 or 1; Y is an alkylene group having 1-3 carbon atoms and optionally containing a hydroxyl group; $m_1$ and $m_2$, being the same or different, are 0 or 1, both $m_1$ and $m_2$ not being 0 at the same time; A is an alkyleneoxy group derived from an alkylene oxide having 2-3 carbon atoms; and p has an average value from 0 to 1.9, preferably from 0.5 to 1.5; or a salt thereof.

In short, the novel surfactants are more useful for surfactant flooding than the previously described surfactants since they are not as sensitive to variations in salinity, temperature and equivalent alkane carbon number of the oil. In practice, such an insensitivity is necessary, at least in large scale operations, such as in off-shore flooding, since the conditions in the reservoir vary considerably.

When injecting an aqueous solution of the novel surfactants into an oil reservoir they will form a large middle phase microemulsion in equilibrium with excess oil and brine. At equilibrium the surfactants are mainly localized in the middle phase microemulsion and their concentration in both the brine phase and the oil phase is very low. This is a necessary condition to keep the need of surfactants on a low level. Preferably, the surfactants are used without any cosurfactants, but the use of additional surfactants and cosurfactants are also within the scope of this invention. In order to increase the solubility of the surfactants in the aqueous injection media, the surfactants could be added in the form of an inorganic or organic ammonium salt or combined with a solubilizing agent, such as a lower alcohol or a lower ethylene glycol monoalkyl ether.

In some cases, the use of mixtures of surfactants belonging to the present invention may be advantageously employed. Such mixtures may comprise two or more components with different values for, for instance, p or R. It is essential, however, that each component of such a mixture is useable alone, i.e. that it gives a middle phase microemulsion with oil and brine. By selecting one component which is a little bit too hydrophilic and one which is a little bit too hydrophobic, the mixture, which may be formulated to be at optimum, sometimes gives a larger middle phase microemulsion that could be obtained with the component only. Examples of suitable groups R are alkyl groups, such as 1-butyl, 2-methylpropyl, 2-methylbutyl, 1-pentyl, 2-ethylbutyl and 1-hexyl. By a proper selection of R, Y, r and p, the HLB-value of the surfactant can be regulated. When used at high temperatures, for example above 70°C, and for long fluid distances, compounds where r is 1, are preferred. The salt is normally an alkali metal salt but the ammonium salt or an organic ammonium salt may also be used.

The mixture consists essentially of compounds, where p is 0 or 1 and especially suitable are those compounds where p is 1. A is preferably an ethyleneoxy group. Y is preferably a $C_{2-3}$-alkylene group.

The branched hydrophobic part of the molecule is asymmetric, consisting of two main chains, one of which being straight or branched octyl and the other being a hydrocarbon residue of 4-6 carbon atoms.

The novel surfactants are tolerant to high concentrations of divalent cations and they exhibit only a small temperature dependence on HLB. Their salinity window, i.e. the salinity range for the appearance of a middle phase microemulsion, is very large. At least, in the salinities of interest to most off-shore operations, i.e. around sea-water salinity, the salinity window is much larger than for the previously described surfactants with larger amounts of ethyleneoxy groups. Likewise, microemulsions based on the novel surfactants are much less sensitive to variations in temperature and in equivalent alkane carbon number (a hydrophobicity index) of the oil than the previously known surfactants with more ethyleneoxy groups. Furthermore, the novel surfactants give middle phase microemulsions over an unusually wide range of oil to water ratio.

The surfactants of the present invention can be prepared by known synthesis methods. Typical procedures are outlined below:

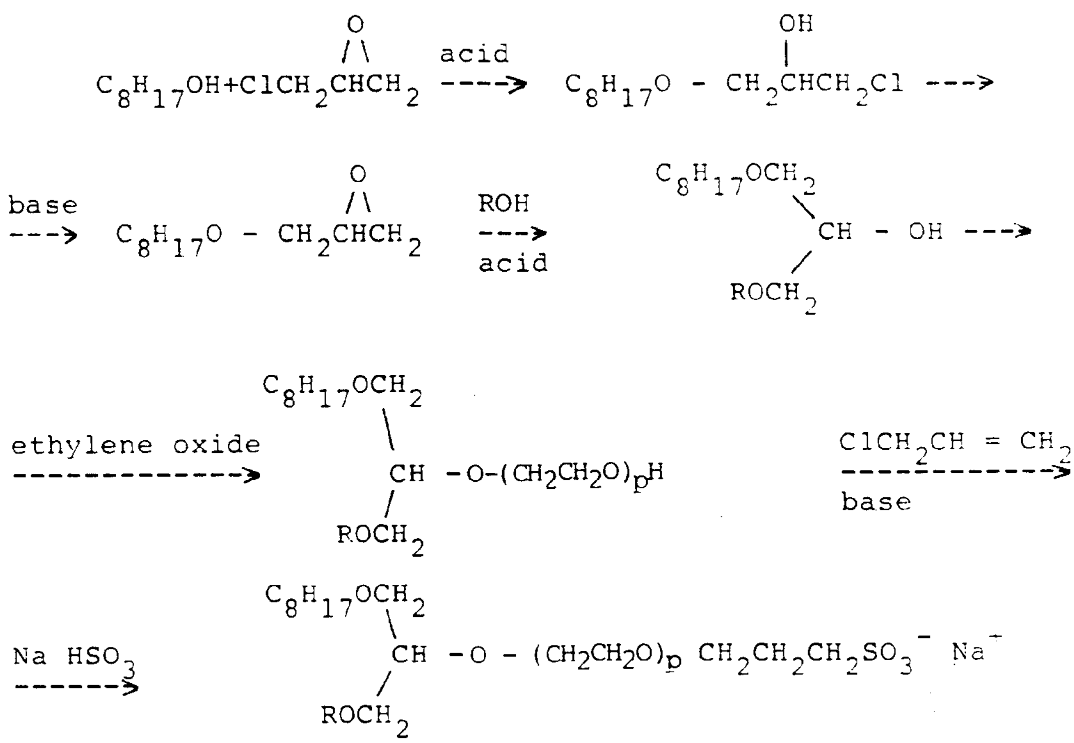


In the formulae above, R and p have the meaning earlier mentioned.

As an alternative, the ethoxylate intermediate can be reacted with epichlorohydrin followed by a reaction with a sulphite salt.

In order to prepare compounds of the general formula above in which $m_1$ or $m_2$ is 0, the corresponding α-olefin oxide may be used as starting material. The first reaction step is then:

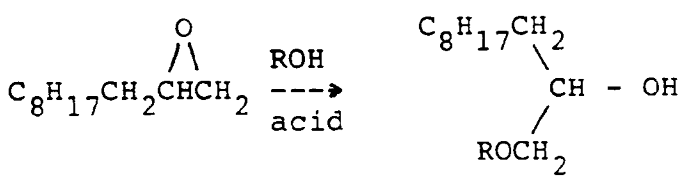


or

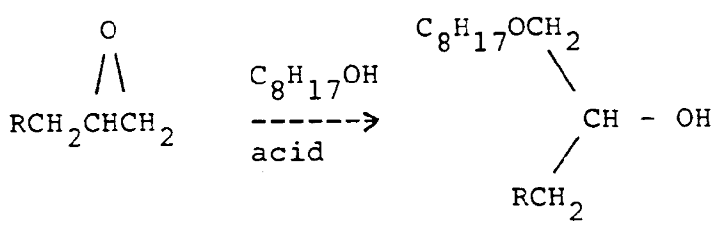


Sulfates may be produced by reaction of the ethoxylate intermediate and $SO_3$.

The invention is further illustrated by the examples below.

## Example 1

Three surfactants of the present invention were prepared and compared in flooding experiments with a surfactant of the previously known type with a higher number of ethyleneoxy groups.

The novel surfactants were the following:

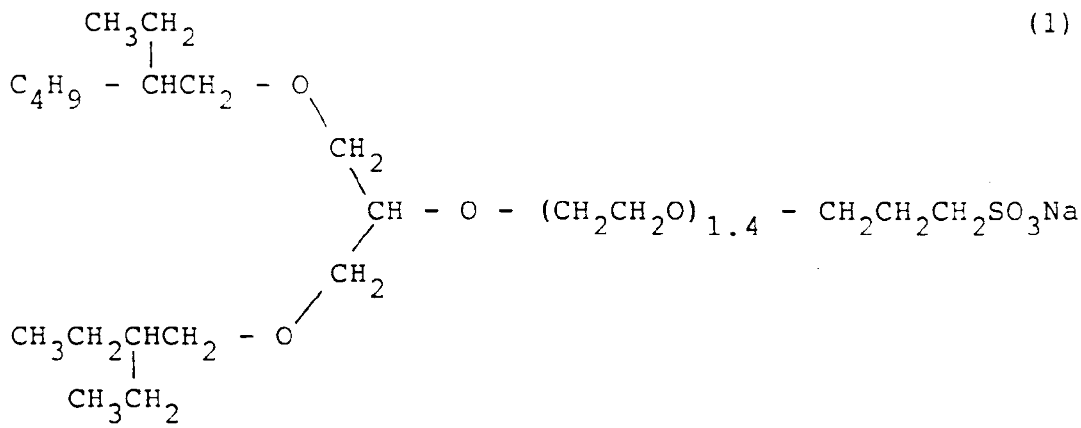

(1)

and

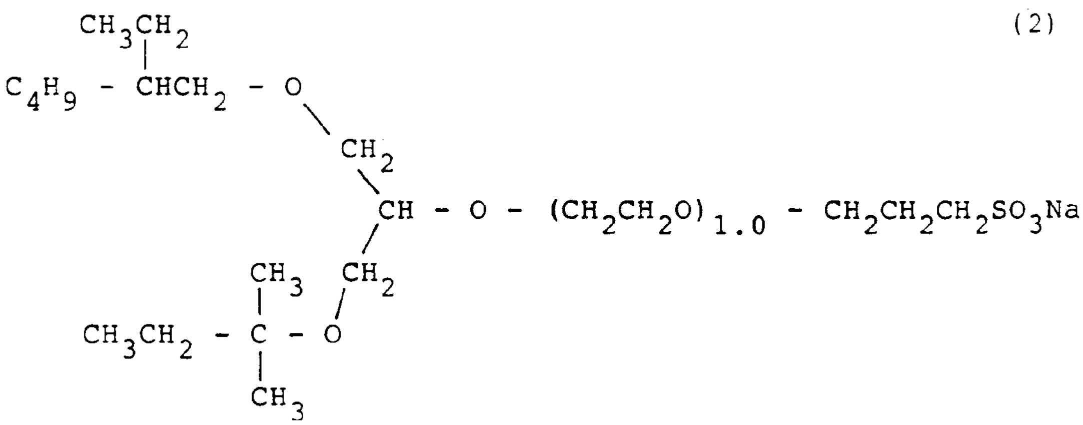

(2)

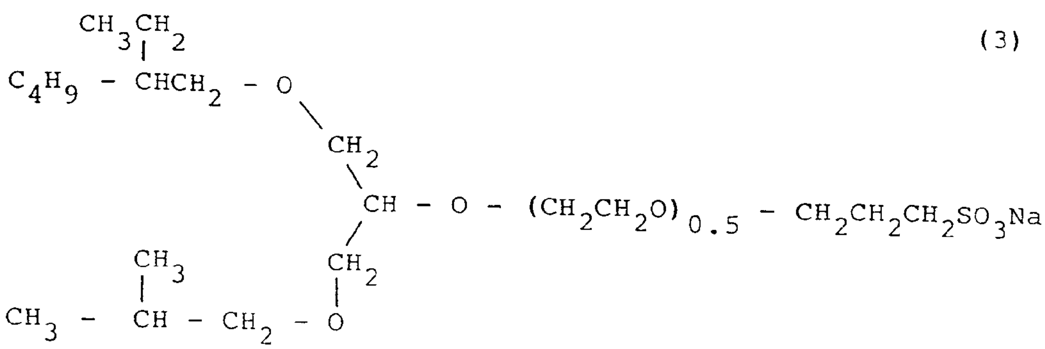

(3)

The previously known surfactant used for comparison was

(4)

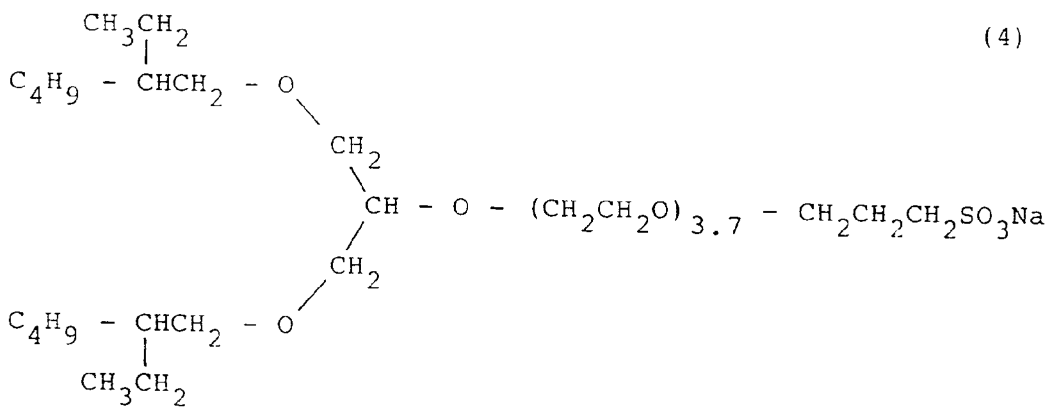

The surfactants were all prepared according to the general procedure given above. A detailed description of the synthesis is given below for surfactant No. 1. The other three surfactants were prepared analogously.

(Step 1)

Epichlorohydrin is added dropwise to 2-ethylhexanol catalysed with 1% (by weight) of $SnCl_4$ at 70°C.

(Step 2)

1.5 Equivalents of NaOH is added dropwise as a 30% aqueous solution to the chloroglyceryl ether formed in Step 1 under vigorous stirring at 80°C. After completed addition, the reaction mixture is kept at 80°C and the formation of product is monitored by repeated titrations of epoxide content in the organic phase. After completed reaction, agitation is stopped and the organic and aqueous layers are carefully separated.

(Step 3)

The glycidol ether formed in Step 2 is reacted with 2-ethylbutanol in an analogous procedure to that described in Step 1. 1-(2-ethylbutyl)-3-(2-ethylhexyl)glycerol is formed.

(Step 4)

The secondary alcohol of Step 3 is reacted with 1.4 eq. of ethylene oxide per mole of alcohol. The reaction temperature is kept at 70°C and $SnCl_4$ (1% by weight) is used as catalyst.

(Step 5)

The ethoxylate of Step 4 is mixed with allyl chloride (1 eq.), cetyltriethylammonium bromide (0.05 eq.), solid NaOH (2 eq.) and water (0.30 eq.). The vigorously stirred reaction mixture is heated at 40°C for 5 h and then at 70°C for 3 h, giving the allyl ether which is freed from salts by filtration.

(Step 6)

The allyl ether of Step 5 is charged portionwise to a 200 ml solution of tetrabutylammonium hydrogen sulphate (0.1 eq.) in a 65:35 mixture (by volume) of 2-propanol and water buffered at pH 8. An aqueous saturated solution of sodium hydrogen sulphite (1.1 eq.) is added dropwise at 50°C under a continuous oxygen purge. When the addition is completed, the mixture is left under stirring at 50°C for 8 h. The disappearance of allyl ether is monitored by $^1H$ - NMR analysis. After completed reaction, water and 2-propanol are added, the aqueous layer is saturated with $Na_2CO_3$ at 60°C, the phases are separated and the organic phase concentrated by rotary evaporation to yield the desired sulphonate. The active content of the product is typically around 80%.

The degree of ethoxylation of the surfactants, 1.4, 1.0, 0.5 and 3.7, respectively, is chosen so that each surfactant is optimally balanced for the test system used.

In the flooding experiment, decane was used as model oil, the aqueous component was sea-water and the core temperature was 70°C. All three surfactants gave three phase systems under these conditions with

a middle phase microemulsion in equilibrium with excess oil and water. The symmetrical surfactant 4, however, gave a very high viscous middle phase. On addition of an alcohol, such as 2-butanol, the viscosity of the system was considerably reduced.

Table 1 shows the solubilization parameters and the salinity windows of the three surfactants. The solubilization parameter is widely used as a measure of solubilizing power of the surfactant. It is defined as the amount of oil (or water) solubilized in the middle phase divided by the amount of surfactant used at the point of equal solubilization of oil and water. The salinity window is given in sea-water equivalents, i.e. multiples of synthetic sea-water.

Table 1

| Surfactant | Solubilization parameter | Salinity window |
|---|---|---|
| 1 | 17 | 0.8-1.4 |
| 2 | 14 | 0.7-1.4 |
| 3 | 12 | 0.6-1.7 |
| 4 | 20 (gel-like) | 1.0 (gel-like) |
| 4 + 2-butanol | 18 | 1.0-1.1 |

As can be seen from Table 1, the novel surfactants do not give as large a solubilization parameter as surfactant No. 4. However, their salinity window is much larger. Surfactant No. 4 gives a viscosity of the middle phase too high to be of practical interest unless alcohol is added. Weight ratio of alcohol to surfactant is 2:1.

Flooding experiments were performed in a Berea sandstone core of 28.8 cm length and a diameter of 3.75 cm. The permeability was 520 mD, the core was oriented vertically, the overburden pressure applied was 40 bar and the back-pressure 20 bar.

The core having a residual oil saturation of 40% was flooded with sea-water (1.7 pore volumes), a 2% solution of surfactant in sea-water (0.5 pore volumes), a polymer solution (0.5 pore volumes) and, finally, sea-water (1.7 pore volumes). Table 2 shows the effect of the four surfactants tested in terms of total oil recovery.

Table 2

| Surfactant | Oil recovery (%) |
|---|---|
| 1 | 94 |
| 2 | 92 |
| 3 | 85 |
| 4 | 66 |
| 4 + 2-butanol | 80 |

As can be seen, the surfactants of the invention are considerably more efficient than the known surfactant in mobilization of model oil from the sandstone core.

Example 2

One sulphate surfactant of the present invention was prepared and compared in flooding experiments with a surfactant of the previously known type with a higher number of ethyleneoxy groups.

The novel surfactant was the following:

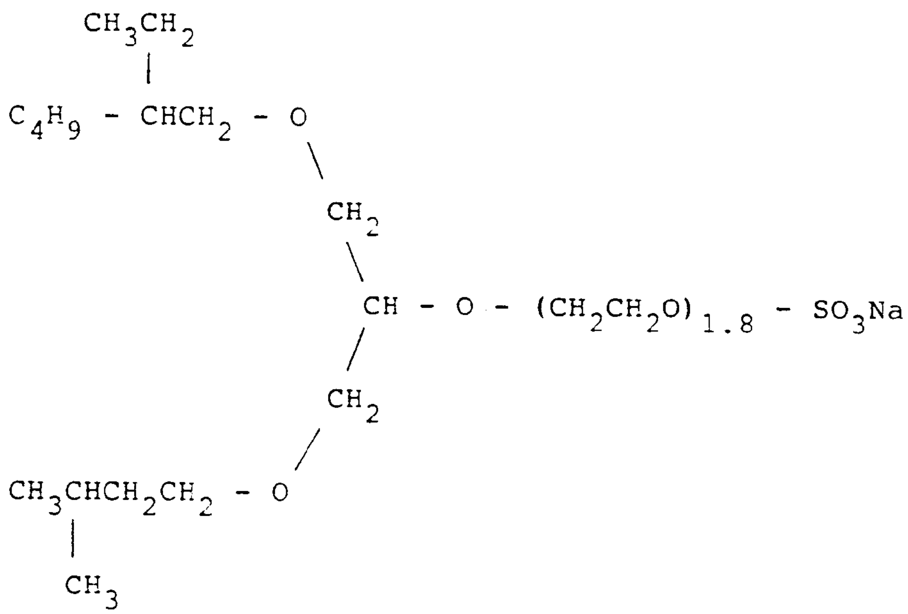

(1)

The previously known surfactant used for comparison was:

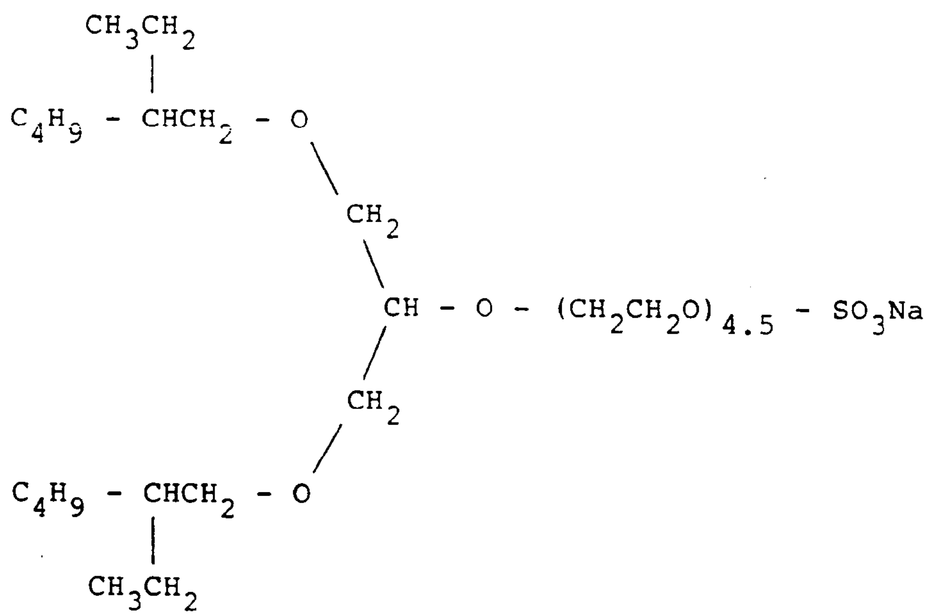

(2)

The surfactants were prepared according to the general procedure given above. The syntheses were run as described by steps 1-4 of Example 1. The ethoxylate obtained from step 4 was reacted with gaseous $SO_3$ for 1 h at 60°C followed by neutralization with aqueous NaOH. The active content of surfactant 1 was 62% and of surfactant 2, 58%.

The degree of ethoxylation of the surfactants, 1.8 and 4.5 respectively, is chosen so that both surfactants are optimally balanced for the test system used.

Flooding experiments were performed in a Berea sandstone core at 70°C using nonane as model oil and sea water as aqueous component. The testing procedure was the same as already given in Example 1.

Both surfactants gave three phase systems under the conditions used with a middle phase microemulsion in equilibrium with excess oil and water. The symmetrical surfactant 2, however, gave a very high viscous middle phase unless an alcohol, such as 2-butanol, was added.

Table 3 shows solubilization parameters and salinity windows of the two surfactants.

Table 3

| Surfactant | Solubilization parameter | Salinity window |
|---|---|---|
| 1 | 20 | 0.7-1.4 |
| 2 | 28 (gel-like) | 1.0 (gel-like) |
| 2 + 2-butanol | 23 | 0.9-1.0 |

As can be seen from Table 3, the novel surfactant No. 1 does not give as large a solubilization parameter as surfactant No. 2. However, its salinity window is much larger. Surfactant No. 2 gives too high a viscosity of the middle phase to be of practical interest unless alcohol is added. The weight ratio of alcohol to surfactant is 2:1.

Table 4 shows the effect of the surfactants tested in core flooding in terms of total oil recovery.

Table 4

| Surfactant | Oil recovery (%) |
|---|---|
| 1 | 86 |
| 2 | 55 |
| 2 + 2-butanol | 63 |

As can be seen, the surfactant of the invention is considerably more efficient than the known surfactant in mobilization of model oil from the sandstone core.

## Claims

**1.** A surfactant having the general formula

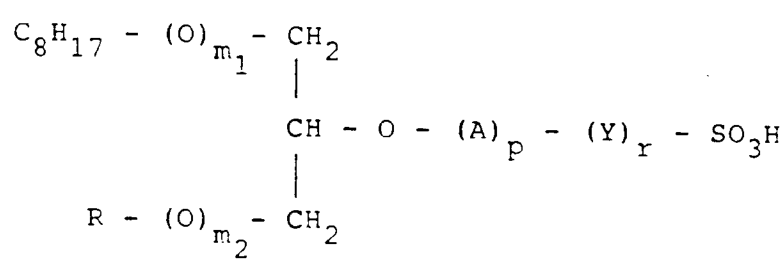

where R is a hydrocarbon containing 4-6 carbon atoms; r is 0 or 1; Y is an alkylene group having 1-3 carbon atoms and optionally containing a hydroxyl group; $m_1$ and $m_2$, being the same or different, are 0 or 1, both $m_1$ and $m_2$ not being 0 at the same time; A is an alkyleneoxy group derived from an alkylene oxide having 2-3 carbon atoms; and p has an average value from 0 to 1.9; or a salt thereof.

**2.** The surfactant in accordance with claim 1, **characterized in** that p has an average value of from 0.5 to 1.5.

**3.** The surfactant in accordance with claim 1 or 2, **characterized in** that $m_1$ and $m_2$ are 1.

4. The surfactant in accordance with any one of claims 1-3, **characterized in** that Y is a $C_{2-3}$-alkylene group.

5. The surfactant in accordance with any one of claims 1-4, **characterized in** that A is an ethyleneoxy group.

6. Use of a surfactant according to any one of claims 1-5 in chemical flooding of an oil well with sea-water.

## Patentansprüche

1. Tensid der allgemeinen Formel

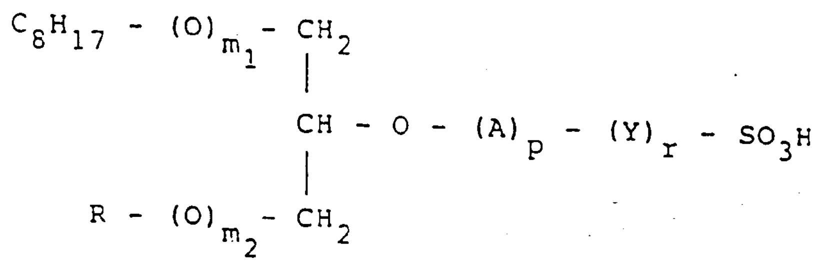

worin R ein Kohlenwasserstoff ist, der 4-6 Kohlenstoffatome enthält, r 0 oder 1 ist, Y eine Alkylengruppe mit 1-3 Kohlenstoffatomen ist, die gegebenenfalls eine Hydroxylgruppe enthält, $m_1$ und $m_2$ gleich oder verschieden sind und 0 oder 1 bedeuten, $m_1$ und $m_2$ jedoch nicht beide gleichzeitig 0 sind, A eine von einem Alkylenoxid mit 2-3 Kohlenstoffatomen abgeleitete Alkylenoxygruppe ist und p einen durchschnittlichen Wert von 0 bis 1,9 hat, oder ein Salz davon.

2. Tensid nach Anspruch 1, worin p einen durchschnittlichen Wert von 0,5 bis 1,5 hat.

3. Tensid nach Anspruch 1 oder 2, worin $m_1$ und $m_2$ 1 sind.

4. Tensid nach irgendeinem der Ansprüche 1-3, worin Y eine $C_{2-3}$ Alkylengruppe ist.

5. Tensid nach irgendeinem der Ansprüche 1-4, worin A eine Ethylenoxygruppe ist.

6. Verwendung eines Tensids nach irgendeinem der Ansprüche 1-5 beim chemischen Fluten einer Ölquelle mit Meerwasser.

## Revendications

1. Tensioactif ayant la formule générale :

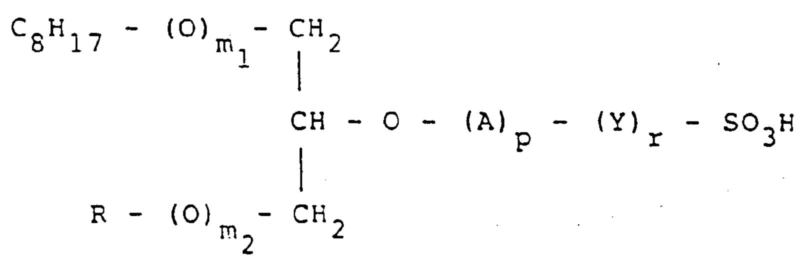

dans laquelle R est un hydrocarbure contenant 4 à 6 atomes de carbone, r est 0 ou 1, Y est un groupe alkylène comportant 1 à 3 atomes de carbone et contenant en option un groupe hydroxyle, $m_1$ et $m_2$, étant identiques ou différents, sont 0 ou 1, $m_1$ et $m_2$ n'étant pas tous deux 0 au même moment, A est un groupe alkylènoxy dérivé d'un oxyde d'alkylène comportant 2 à 3 atomes de carbone et p a une valeur moyenne de 0 à 1,9, ou l'un de ses sels.

2. Tensioactif selon la revendication 1, caractérisé en ce que p a une valeur moyenne de 0,5 à 1,5.

3. Tensioactif selon la revendication 1 ou 2, caractérisé en ce que $m_1$ et $m_2$ sont 1.

4. Tensioactif selon l'une quelconque des revendications 1 à 3, caractérisé en ce que Y est un groupe alkylène en $C_2$ à $C_3$.

5. Tensioactif selon l'une quelconque des revendications 1 à 4, caractérisé en ce que A est un groupe éthylènoxy.

6. Utilisation d'un tensioactif selon l'une quelconque des revendications 1 à 5 par le balayage chimique d'un puits de pétrole à l'eau de mer.